# EUROPÄISCHE PATENTSCHRIFT

(11) **EP 1 695 358 B1**
(45) Veröffentlichungstag und Bekanntmachung des Hinweises auf die Patenterteilung: **30.01.2008**
(21) Anmeldenummer: 04804754.2
(22) Anmeldetag: 09.12.2004
(51) Int. Cl.: H01B 1/22, B29C 70/88, C08K 3/08

(54) **METALL-KUNSTSTOFF-HYBRID UND DARAUS HERGESTELLTER FORMKÖRPER**
METAL/PLASTIC HYBRID AND SHAPED BODY PRODUCED THEREFROM
HYBRIDE METAL-MATIERE PLASTIQUE ET CORPS MOULE PRODUIT A PARTIR DUDIT HYBRIDE

(30) Priorität: 12.12.2003 DE 10358342
(43) Veröffentlichungstag der Anmeldung: 30.08.2006
(73) Patentinhaber: SIEMENS AKTIENGESELLSCHAFT, 80333 München (DE)
(72) Erfinder: GREINER, Robert, 91083 Baiersdorf (DE); KAPITZA, Heinrich, 90765 Fürth (DE); OCHSENKÜHN, Manfred, 92348 Berg (DE)
(86) Internationale Anmeldenummer: PCT/EP2004/053381
(87) Internationale Veröffentlichungsnummer: WO 2005/057590

(56) Entgegenhaltungen:
- EP-A- 0 942 436
- US-A- 4 533 685
- US-A- 4 882 227
- US-A- 5 554 678
- US-B1- 6 274 070
- PATENT ABSTRACTS OF JAPAN Bd. 015, Nr. 355 (E-1109), 9. September 1991 (1991-09-09) & JP 03 138808 A (TOSHIBA CHEM CORP), 13. Juni 1991 (1991-06-13)

## Beschreibung

Die Erfindung betrifft ein Metall-Kunststoff-Hybrid sowie einen daraus hergestellten Formkörper.

Für viele Anwendungen von Kunststoffen in der Elektronik/Elektrotechnik wird eine elektrische und/oder elektromagnetische und/oder thermische Leitfähigkeit gefordert. Es gibt heute eine Vielzahl von Kunststoffcompounds, die einen Bereich des spezifischen Durchgangswiderstandes von 10¹⁰ Ωcm bis 10⁻¹ Ωcm abdecken. Wenige Spezialprodukte, die z.B. Kohlefaser als Füllstoff beinhalten, erreichen ca. 2x10⁻² Ωcm. Als elektrisch leitende Füllstoffe werden z.B. Ruß, Kohlefasern, Metallpartikel, Metallfasern oder intrinsisch leitfähige Polymere eingesetzt. Es sind aber bisher keine thermoplastischen Compounds bekannt, die einen spezifischen Durchgangswiderstand von kleiner 10⁻² Ωcm haben und z.B. im Spritzgießverfahren verarbeitbar sind.

Um einen Isolator wie Kunststoff leitfähig einzustellen, werden über elektrisch leitfähige Füllstoffe durchgängige Leitpfade geschaffen, d.h. die leitfähigen Partikel berühren sich im Idealfall. Es ist bekannt, dass sich ein leitendes Netzwerk im Kunststoff am besten mit dem Einbringen von Metall- oder Kohlefasern realisieren läßt. Je länger dabei die Faser ist, desto geringer ist der Gewichtsanteil an Faser, der für eine bestimmte Leitfähigkeit benötigt wird. Allerdings wird mit zunehmender Faserlänge auch die Verarbeitung problematischer, da die Viskosität des Compounds stark ansteigt. So sind am Markt erhältliche Compounds mit einer Stahlfaserlänge von 10 mm nur bis zu einem maximalen Gewichtsanteil Faser von ca. 25-30 % im Spritzgießverfahren verarbeitbar. Mit kürzeren Fasern lassen sich Compounds mit höheren Gewichtsanteilen Faser noch im Spritzgießprozess verarbeiten, allerdings bringt dies keine Erniedrigung des spezifischen Durchgangswiderstandes im Vergleich zur Langfaser. Ein ähnliches Verhalten gilt für kohlefaser- und metallpartikelgefüllte Thermoplaste. Ein weiteres Problem ist, dass sich, bedingt durch unterschiedliche Ausdehnungskoeffizienten, bei Temperatureinwirkung das Fasernetz der gefüllten Thermoplaste weitet und die Leitpfade unterbrochen werden.

Es wird auch versucht, nur niedrig schmelzendes Metall (fusible alloys) in Kunststoff einzuarbeiten, dadurch werden aber nur Füllgrade von 40-50 Gew% erreicht, mit einem spezifischen Durchgangswiderstand in der Größenordnung von 10⁵ Ωcm. Höhere Füllgrade sind ausgeschlossen, wegen der schlechten Kompatibilität und der großen Dichteunterschiede der beiden zu vermischenden Komponenten.

EP-A-942436 A D2 offenbart (vgl. Beispiel 6 in der Tabelle 1) ein Metall-Kunststoff-Hybrid, welches einen Thermoplasten (Nylon 12), eine im Bereich zwischen 100 °C und 400 °C schmelzende, bleifreie Metallverbindung (nonleaded solder Sn-Cu-Ni mit Schmelzpunkt 225 °C, vgl. Absatz [0028]) und Kupferfasern in einer Menge von 50 Gew. %, (vgl. Tabelle 1) umfaßt.

Aufgabe der Erfindung ist es daher, einen durch herkömmliche Kunststoffformgebungsprozesse (Spritzguss etc) bearbeitbaren Werkstoff zu schaffen, der eine hohe elektrische und thermische Leitfähigkeit hat.

Gegenstand der Erfindung ist ein Metall-Kunststoff-Hybrid, das einen Thermoplasten, eine im Bereich zwischen 100°C und 400 °C schmelzende bleifreie Metallverbindung in einer Menge von 20 bis 50 Gew% und Kupferfasern in einer Menge von 30 bis 70 Gew% umfasst, welches erhältlich ist aus einer Schmelzlegierung, die Metallverbindung und den Thermoplasten umfassend, der die Kupferfasern zugeschlagen werden, wobei die Kupferfasern mit der im Bereich zwischen 100°C und 400°C schmelzenden Metallverbindung im Hybrid gemeinsam als Fasernetzwerk vorliegen.

Außerdem ist Gegenstand der Erfindung ein aus dem Metall-Kunststoff-Hybrid hergestellter Formkörper sowie die Verwendung des Hybrids in der Elektrotechnik, Elektronik, bei elektromagnetischen Bauteilen und/oder zur Wärmeableitung.

Völlig überraschend hat sich herausgestellt, dass durch die Kombination einer niedrig schmelzenden Metallverbindung mit einem elektrischen und/oder metallischen Füllstoff bisher noch nie da gewesene Füllgrade an elektrisch leitenden Partikeln oder Fasern und/oder Metall im Thermoplasten realisierbar und stabil herstellbar sind.

Als elektrisch leitfähiger und/oder metallischer Füllstoff kommen Kupferfasern zum Einsatz. Die Länge der Faser liegt bevorzugt zwischen 1 - 10 mm, die Dicke sollte bevorzugt < 100 µm sein.

Als Thermoplast sind alle am Markt angebotenen Thermoplaste verwendbar, die je nach gefordertem Eigenschaftsprofil ausgewählt werden können.

Als Thermoplast enthält das Metall/Kunststoff-Hybrid beispielsweise (vorzugsweise) eines der folgenden Polymere: Massenkunststoffe wie ein Polystyrol (PS) oder ein Polypropylen (PP) etc. und/oder ein technisches Thermoplast wie Polyamid (PA) oder Polybutylenterephthalat (PBT) etc. oder als Hochtemperaturthermoplasten ein Polyetherimid (PEI), ein Polyphenylensulfid (PPS), ein teilaromatisches Polyamid etc. Selbstverständlich können auch alle gängigen Blends und thermoplastischen Elastomere eingesetzt werden.

Unter einer niedrig schmelzenden Metalllegierung wird eine metallische Verbindung verstanden, deren Schmelzpunkt bzw. Schmelzbereich zwischen 100°C und 400°C, vorzugsweise zwischen 100 °C und 300 °C liegt. Für Hochtemperaturthermoplaste, die teilweise Verarbeitungstemperaturen von > 400 °C erfordern, können auch Metallverbindungen mit einem Schmelzpunkt/Schmelzbereich von > 300 °C Anwendung finden. Sowohl niedrig schmelzende Metalllegierungen mit einem Schmelzbereich als auch solche mit einem Schmelzpunkt können erfindungsgemäß eingesetzt werden. Die metallische Verbindung umfasst im Wesentlichen Metalle, kann aber beliebige Zusätze, insbesondere auch nichtmetallische Zusätze und Additive haben.

Ein Merkmal der niedrig schmelzenden Metalllegierung mit Schmelzpunkt ist ein unmittelbarer und drastischer Viskositätsabfall auf < 50 mPa s beim Überschreiten des Schmelzpunktes. Diese extrem niedrige, fast wasserähnliche Viskosität trägt im Compound entscheidend zum hohen Fließvermögen bei hohen Füllgraden an Füllstoff bei. Bei einer niedrig schmelzenden Metalllegierung (Lotverbindung) mit einem Schmelzbereich fällt die Viskosität im Schmelzbereich kontinuierlich ab und erreicht erst nach Überschreiten des Schmelzbereichs einen Wert < 50 mPa s. Erfindungsgemäß können sowohl niedrig schmelzende Metallverbindungen mit einem Schmelzpunkt als auch solche mit einem Schmelzbereich eingesetzt werden. Bevorzugt werden niedrig schmelzende Metallverbindungen eingesetzt, die frei von Schwermetall, insbesondere solche, die bleifrei sind, also unter toxikologischen Gesichtspunkten unbedenklich sind. Beispielhaft eingesetzte niedrig schmelzende Metallverbindungen enthalten zumindest auch Zinn, Zink und/oder Wismut.

Je nach Anforderung können die Anteile an niedrig schmelzender Metallegierung und elektrisch leitfähigen Füllstoff in einem weiten Bereich variiert werden, allgemein zwischen 1 bis > 95 Gew.-%, insbesondere zwischen 10 und 80 Gew-% und zwischen 20 und 75 Gew-%.

Zur Erreichung der höchsten Leitfähigkeit hat sich gezeigt, daß der Anteil der niedrig schmelzenden Metalllegierung zwischen 20 und 50 Gew.-%, vorteilhafterweise zwischen 22 und 48 Gew-% und insbesondere bevorzugt zwischen 25 und 45 liegen sollte.

Der Anteil an leitfähigen Füllstoffe(n) beträgt bevorzugt zwischen 30 und 70 Gew.-%, insbesondere bevorzugt zwischen 33 und 68 Gew-% und insbesondere bevorzugt zwischen 35 und 65 Gew-%.

Der Gesamtanteil der leitfähigen Komponenten (niedrig schmelzende Metallverbindung und/oder Füllstoff) beträgt in der Regel ≥ 60 Gew-%, bevorzugt ≥ 70 Gew.-%, insbesondere bevorzugt ≥ 80 Gew-%, wobei bis zu >95 Gew-% erreicht werden. Damit werden spezifische Durchgangswiderstände ≤ 10⁻³ Ω cm erreicht. Ebenso gut können hohe thermisch Leitfähigkeiten erreicht werden. Die Anforderungen an die Leitfähigkeiten (e-lektrisch/thermisch) richten sich nach dem Einsatzgebiet des Hybrids und können in weiten Grenzen variieren. Die Angabe der Leitfähigkeiten soll die Erfindung jedoch in keiner Weise einschränken.

Wenn als leitfähiger Füllstoff Kupferfasern eingesetzt werden, kommt es in Kombination mit der niedrig schmelzenden Metalllegierung zu einer "Verlötung" der Cu-Fasern, die auch im abgekühlten, erstarrten Zustand erhalten bleibt. Dies hat den besonderen Vorteil bei einem späteren Bauteil oder Formkörper, der Temperaturwechseln ausgesetzt ist, dass die "Kontaktierung des Fasernetzwerks" und damit die Leitfähigkeit voll erhalten bleibt.

Hervorzuheben ist, dass sich diese Compounds mit einem Gesamtanteil an leitfähigen Komponenten (niedrig schmelzende Metallverbindung + Füllstoff) von ≥ 80 Gew.-% noch im Spritzgießverfahren verarbeiten lassen. Dies wird nur durch die Kombination der beiden leitfähigen Komponenten im Thermoplasten erreicht.

Durch die niedrigen spezifischen Durchgangswiderstände wird das Entstehen von Verlustwärme in Bauteilen stark begrenzt, die überdies in Kombination mit der hohen thermischen Leitfähigkeit der Compounds, die bevorzugt über 5 W/mK und bis zu > 10 W/(mK)beträgt, sehr effektiv abgeführt wird (die Kühlung der elektronischen Bauteile ist eines der dringendsten Probleme der Mikroelektronik).

Vorteilhafterweise wird der Werkstoff bei einer Temperatur hergestellt und verarbeitet, bei der sowohl die niedrig schmelzende metallische Legierung als auch der Thermoplast in schmelzflüssigem Zustand vorliegen. Diese Schmelzlegierung, eine anorganische und eine organische Komponente umfassend, besitzt eine extrem hohe Fließfähigkeit, so dass noch Füllstoffe, also Partikel und/oder Fasern zu einem hohen Gewichtsanteil zugeschlagen werden können, ohne die guten Fließ- bzw. Verarbeitungseigenschaften zu verlieren, das heißt ohne einen zu starken Anstieg der Viskosität zu bewirken.

Die Herstellung der Compounds kann sowohl diskontinuierlich auf einem Kneter als auch kontinuierlich auf einem Extruder erfolgen. Die Messung des spezifischen Durchgangswiderstandes (s. Ausführungsbeispiele) wurde an Probekörpern mir den Abmaßen 50 x 6 x 4 mm durchgeführt, die im Spritzgießverfahren hergestellt wurden.

Die aus dem erfindungsgemäßen Hybrid hergestellten Formkörper werden durch die üblichen Kunststoffformgebungsprozesse wie Spritzguss, Extrusion, Tiefziehen, etc. produziert.

### Ausführungsbeispiele

### Kunststoff: Polyamid 6 (PA 6)

Niedrig schmelzende Metallegierung: MCP 200 der Firma HEK GmbH, Lübeck, Deutschland, Schmelzpunkt 200 °C
Zuschlagstoff: Kupferfaser; Länge ca. 2 mm, Dicke ca. 80 µm.

### 1.1 Zusammensetzung Compound in Gewichtsprozent:

PA 6 : MCP 200 : Cu-Faser = 20 : 20 : 60

| | |
|---|---|
| Spezifischer Durchgangswiderstand: | 2,7 x 10⁻³ Ω cm |
| Spezifische Leitfähigkeit: | 3,7 x 10² 1/(Ω cm) |

### 1.2 Zusammensetzung Compound in Gewichtsprozent:

PA 6 : MCP 200 : Cu-Faser = 15 : 25 : 60

| | |
|---|---|
| Spezifischer Durchgangswiderstand: | 6, 3 x 10⁻⁴ Ω cm |
| Spezifische Leitfähigkeit: | 1,6 x 10³ 1/(Ω cm) |

### 1.3 Zusammensetzung Compound in Gewichtsprozent:

PA 6 : MCP 200 : Cu-Faser = 10 : 35 : 55

| | |
|---|---|
| Spezifischer Durchgangswiderstand: | 5,4 x 10⁻⁵ Ω cm |
| Spezifische Leitfähigkeit: | 1,8 x 10⁴ 1/(Ω cm) |
| Thermische Leitfähigkeit: | 10,5 W/(mK) |
| Elektromagnetische Schirmdämpfung: | > 100 dB |

### Kunststoff: Polyamid 6 (PA 6)

Niedrig schmelzende Metallegierung: MCP 200, Schmelzpunkt 200 °C
Zuschlagstoff: Stahlfaser; Länge ca. 4 mm, Dicke ca. 10 µm

### 2.1 Zusammensetzung Compound in Gewichtsprozent (nicht nach der Erfindung);

PA 6 : MCP 200 : Stahlfaser = 20 : 30 : 50

| | |
|---|---|
| Spezifischer Durchgangswiderstand: | 1,09 x 10⁻² Ω cm |
| Spezifische Leitfähigkeit: | 9,2x 10¹ 1/(Ω cm) |

### Kunststoff: Polyamid 6 (PA 6)

Niedrig schmelzende Metallegierung: MCP 220, Schmelzbereich 97 - 300 °C
Zuschlagstoff: Kupferfaser; Länge ca. 2 mm, Dicke ca. 80 µm

### Zusammensetzung Compound in Gewichtsprozent:

PA 6 : MCP 220 : Cu-Faser = 10 : 35 : 55

| | |
|---|---|
| Spezifischer Durchgangswiderstand: | 1,09 x 10⁻⁴ Ω cm |
| Spezifische Leitfähigkeit: | 9, 16 x 10³ 1/(Ω cm) |

### 3.1 Kunststoff: Polyamid 6 (PA 6)

Niedrig schmelzende Metallegierung: MCP 200 A, Schmelzbereich 197 - 208 °C
Zuschlagstoff: Kupferfaser; Länge ca. 2 mm, Dicke ca. 80 µm

### Zusammensetzung Compound in Gewichtsprozent:

PA 6 : MCP 200 A : Cu-Faser = 10 : 30 : 60

| | |
|---|---|
| Spezifischer Durchgangswiderstand: | 1,4 x 10⁻⁴ Ω cm |
| Spezifische Leitfähigkeit: | 7,1 x 10³ 1/(Ω cm) |

### 3.2 Kunststoff Polyamid 6 (PA 6)

Niedrig schmelzende Metallegierung: MCP 200 B, Schmelzbereich 197 - 225 °C
Zuschlagstoff: Kupferfaser; Länge ca. 2 mm, Dicke ca. 80 µm

### Zusammensetzung Compound in Gewichtsprozent:

PA 6 : MCP 200 B : Cu-Faser = 10 : 30 : 60

| | |
|---|---|
| Spezifischer Durchgangswiderstand: | 2,6 x 10⁻⁴ Ω cm |
| Spezifische Leitfähigkeit: | 4,7 x 10³ 1/(Ω cm) |

### Kunststoff: Polyamid 6 (PA 6)

Niedrig schmelzende Metallegierung: MCP 200, Schmelzpunkt 200 °C
Zuschlagstoff: Kupferfaser; Länge ca. 2 mm, Dicke ca. 80 µm
Zuschlagstoff: Stahlfaser; Länge ca. 4 mm, Dicke ca. 10 µm

### Zusammensetzung Compound in Gewichtsprozent (nicht nach der Erfindung):

PA 6 : MCP 200 : Cu-Faser : Stahlfaser = 15 : 25 : 30 : 30

| | |
|---|---|
| Spezifischer Durchgangswiderstand: | 5,3 x 10⁻³ Ω cm |
| Spezifische Leitfähigkeit: | 1,89 x 10² 1/(Ω cm) |

### Kunststoff: Polyamid 6 (PA 6)

Niedrig schmelzende Metallegierung: MCP 200, Schmelzpunkt 200 °C
Zuschlagstoff: Kupferkugel; ∅ ca. 32 µm

### Zusammensetzung Compound in Gewichtsprozent (nicht nach der Erfindung);

PA 6 : MCP 200 : Cu-Kugel = 10 : 15 : 75

| | |
|---|---|
| Spezifischer Durchgangswiderstand: | 6,0 x 10⁻² Ω cm |
| Spezifische Leitfähigkeit: | 1,67 x 10¹ 1/(Ω cm) |

### Kunststoff: Polyamid 6 (PA 6)

Niedrig schmelzende Metallegierung: MCP 200, Schmelzpunkt 200 °C
Zuschlagstoff: Kupferfaser; Länge ca. 2 mm,
Dicke ca. 80 µm
Zuschlagstoff: Kupferkugel; ∅ ca. 32 µm

### Zusammensetzung Compound in Gewichtsprozent (nicht nach der Erfindung):

PA 6 : MCP 200 : Cu-Faser : Cu-Kugel = 15 : 15 : 60 : 10

| | |
|---|---|
| Spezifischer Durchgangswiderstand: | 2,89 x 10⁻³ Ω cm |
| Spezifische Leitfähigkeit: | 3, 46 x 10² 1/(Ω cm) |

### Kunststoff: Acrylnitril-Butadien-Styrol-Copolymer (ABS)

Niedrig schmelzende Metallegierung: MCP 200 A, Schmelzbereich 197-208 °C
Zuschlagstoff: Kupferfaser; Länge ca. 2 mm, Dicke ca. 80 µm

### Zusammensetzung Compound in Gewichtsprozent:

ABS : MCP 200 : Kupferfaser = 25 : 35 : 40

| | |
|---|---|
| Spezifischer Durchgangswiderstand: | 7,4 x 10⁻³ Ω cm |
| Spezifische Leitfähigkeit: | 1,4 x 10² 1/(Ω cm) |

### Kunststoff: Polyphenylensulfid (PPS)

Niedrig schmelzende Metallegierung: MCP 200, Schmelzpunkt 200 °C
Zuschlagstoff: Kupferfaser; Länge ca. 2 mm,
Dicke ca. 80 µm

### Zusammensetzung Compound in Gewichtsprozent:

PPS : MCP 200 : Kupferfaser = 15 : 35 : 50

| | |
|---|---|
| Spezifischer Durchgangswiderstand: | 4,3 x 10⁻⁵ Ω cm |
| Spezifische Leitfähigkeit: | 2, 3 x 10⁴ 1/(Ω cm) |

### Kunststoff: Polyamid 66 (PA 66)

Niedrig schmelzende Metallegierung: MCP 200, Schmelzpunkt 200 °C
Zuschlagstoff: Kupferfaser; Länge ca. 2 mm,
Dicke ca. 80 µm

### Zusammensetzung Compound in Gewichtsprozent:

PA 66 : MCP 200 : Kupferfaser = 20 : 25 : 55

| | |
|---|---|
| Spezifischer Durchgangswiderstand: | 1,8 x 10⁻³ Ω cm |
| Spezifische Leitfähigkeit: | 5,6 x 10² 1/(Ω cm) |

### Kunststoff: Polyetherimid (PEI)

Niedrig schmelzende Metallegierung: MCP 220, Schmelzbereich 97-300 °C
Zuschlagstoff: Kupferfaser; Länge ca. 2 mm,
Dicke ca. 80 µm

### Zusammensetzung Compound in Gewichtsprozent:

PEI : MCP 220 : Kupferfaser = 25 : 30 : 45

| | |
|---|---|
| Spezifischer Durchgangswiderstand: | 9,3 x 10⁻⁴ Ω cm |
| Spezifische Leitfähigkeit: | 1,1 x 10³ 1/(Ω cm) |

Mit den beschriebenen Compounds werden spezifische Durchgangswiderstände erreicht, die in der Größenordnung von reinen metallischen Leitern liegen. Durch die gleichzeitig hohe Fließfähigkeit der Compounds eröffnet sich ein innovatives Anwendungsspektrum unter anderem im Bereich des Mikrospitzgießens, des 2-Komponenten-Spritzgießens (2-K-Spritzgießen), der Mechatronik, der Kontaktierung und der Bauteilmontage. So können z.B. Leiterbahnen im 2-K-Spritzgießverfahren direkt in ein Bauteil integriert werden was z.B. bei der Herstellung von 3D-MID Bauteilen völlig neue Perspektiven eröffnet. Weiterhin kann am Bauteil direkt die Kontaktierung integriert werden durch z.B. durch eine direkte Kabelumspritzung. In diesem Falle entfällt die Kabelkontaktierung durch einen Schraub-, Klemm- oder Lötprozeß. Möglich ist auch die Integration von Kontaktpins am Bauteil über den Spritzgießprozess. Neue Möglichkeiten bieten sich auch bei der Montage von Bauelementen (Dioden, Kondensatoren, Chips etc.) auf Leiterplatten und Leiterbahnen. Da die neuen Compounds einen hohen Anteil einer niedrig schmelzenden Metallverbindung haben, können die Bauelemente einfacher montiert werden z.B. durch direktes Anlöten von Kontakten mit Lot, oder durch Vorwärmung der Pins und einfaches Eindrücken oder durch punktuelles Aufheizen (z.B. Laser) der Leiterbahnen im Montagebereich und anschließendes Aufsetzen der Bauelemente.

Interessant sind die neuen Compounds auch für Bauteile und Geräte, an die die Forderung einer hohen elektromagnetischen Abschirmung gestellt wird. Zum einen wird die Schirmwirkung durch die oben angesprochenen "Verlötung" der Metallfasern dauerhaft sichergestellt auch bei Temperaturwechselbeanspruchung, was bei den heute verfügbaren Compounds ein großes Problem darstellt. Zum anderen kann sie spritzgießtechnisch bei der Bauteilherstellung realisiert werden, d.h. ein nachträgliches Montieren von z.B. Schirmblechen entfällt. Ein weiteres Problem von Schirmgehäusen aus handelsüblichen Compounds ist die schlechte Kontaktierungsmöglichkeit der Gehäuse bedingt durch die niedrige elektrische Leitfähigkeit. Durch die extrem hohe elektrische Leitfähigkeit der neuen Compounds läßt sich eine einfache und vor allem zuverlässige Kontaktierung realisieren.

Durch die hohe thermische Leitfähigkeit und die Variationsmöglichkeiten in der Formgebung können die neuen Hybride auch bei der Wärmeableitung eingesetzt werden.

Verwendungen in der Elektronik, Elektrotechnik, bei elektromagnetischen Bauteilen, in der Wärmeableitung etc sind möglich. Beispielsweise kann das Hybrid bei Leiterbahnen, Kontaktpins, Thermosicherungen, Kabelkontaktierungen, EMS etc. eingesetzt werden.

Die Erfindung betrifft ein Metall-Kunststoff-Hybrid gemäß Anspruch 1 sowie einen daraus hergestellten Formkörper gemäß Anspruch 6. Durch die Kombination von metallischen Zusätzen im Kunststoff wird hier erstmals gezeigt, dass sich spezifische Durchgangswiderstände von kleiner 10⁻² Ωcm bei gleichzeitig guter Verarbeitbarkeit der Compounds im Spritzgießprozess realisieren lassen. Weiterhin können auch andere Formgebungsprozesse wie Extrusion, Tiefziehen etc. für die Compounds zur Anwendung kommen.

Mit Hilfe der Erfindung ist es erstmals möglich, thermoplastische Compounds herzustellen, die einen spezifischen Durchgangswiderstand von kleiner 10⁻² Ωcm haben und z.B. im Spritzgießverfahren verarbeitbar sind. Ebenso werden mit der Erfindung erstmals Anwendungen wie gespritzte Leiterbahnen und/oder Kontaktpins und/oder Kabelkontaktierung durch direktes Umspritzen etc. mit diesen Compounds realisierbar.

## Patentansprüche

1. Metall-Kunststoff-Hybrid, das einen Thermoplasten, eine im Bereich zwischen 100°C und 400 °C schmelzende bleifreie Metallverbindung in einer Menge von 20 bis 50 Gew% und Kupferfasern in einer Menge von 30 bis 70 Gew% umfasst, welches erhältlich ist aus einer Schmelzlegierung, die Metallverbindung und den Thermoplasten umfassend, der die Kupferfasern zugeschlagen werden, wobei die Kupferfasern mit der im Bereich zwischen 100°C und 400°C schmelzenden Metallverbindung im Hybrid gemeinsam als Fasernetzwerk vorliegen.

2. Metall-Kunststoff-Hybrid nach Anspruch 1, wobei der Anteil der im Bereich zwischen 100°C und 400°C schmelzenden Metalllegierung und den Kupferfasern ≥ 60 Gew.-% beträgt.

3. Metall-Kunststoff-Hybrid nach einem der vorstehenden Ansprüche, das einen spezifischen Durchgangswiderstand von kleiner 10⁻² Ωcm und/oder eine thermische Leitfähigkeit von > 5W/mK hat.

4. Metall-Kunststoff-Hybrid nach Anspruch 1, wobei die Länge der Faser zwischen 1 - 10 mm, die Dicke < 100 µm und/oder die Größe der Partikel < 100 µm beträgt.

5. Metall-Kunststoff-Hybrid nach einem der vorstehenden Ansprüche, bei dem die im Bereich zwischen 100°C und 400°C schmelzende Metallverbindung Anteile an Wismut, Zink und/oder Zinn umfasst.

6. Formkörper, hergestellt durch einen üblichen Kunstoffformgebungsprozess, der zumindest zum Teil aus einem Metall-Kunststoff-Hybrid nach einem der Ansprüche 1 bis 6 hergestellt ist.

7. Verwendung eines Hybrids nach einem der Ansprüche 1 bis 6 in der Elektrotechnik, Elektronik, bei elektromagnetischen Bauteilen und/oder zur Wärmeableitung.

## Claims

1. Metal/plastic hybrid which comprises a thermoplastic, a lead-free metal compound melting in the range between 100°C and 400°C in a quantity of 20 to 50 % by weight and copper fibres in a quantity of 30 to 70 % by weight, which is achievable from a melting alloy, comprising the metal compound and the thermoplastic, which are added to the copper fibres, with the copper fibres with the metal compound melting in the range between 100°C and 400°C being present jointly in the hybrid as a fibre network.

2. Metal/plastic hybrid according to claim 1, whereby the proportion of the metal alloy melting in the range between 100°C and 400°C and the copper fibres is ≥ 60 % by weight.

3. Metal/plastic hybrid according to one of the preceding claims, which has a specific volume resistance of less than 10⁻² Ωcm and/or a thermal conductivity of > 5W/mK.

4. Metal/plastic hybrid according to Claim 1, whereby the length of the fibres lies between 1 and 10 mm, the thickness is < 100 µm and/or the size of the particles is < 100 µm.

5. Metal/plastic hybrid according to one of the preceding claims, in which the metal compound melting in the range between 100°C and 400°C includes proportions of bismuth, zinc and/or tin.

6. Shaped body, manufactured by means of a usual plastic shaping process, which is at least in part manufactured from a metal/plastic hybrid according to one of claims 1 to 6.

7. Use of a hybrid according to one of claims 1 to 6 in electrical engineering, electronics, in electromagnetic devices and/or for heat dissipation.

## Revendications

1. Hybride métal-matière plastique comprenant une matière thermoplastique, un composé métallique sans plomb entrant en fusion dans la zone comprise entre 100°C et 400°C à raison de 20 à 50 % en poids et des fibres de cuivre à raison de 30 à 70 % en poids, qui est réalisable à partir d'un alliage fusible comprenant ledit composé métallique et ladite matière thermoplastique et auquel on ajoute lesdites fibres de cuivre, lesdites fibres de cuivre avec ledit composé métallique entrant en fusion dans la zone comprise entre 100°C et 400°C étant présentes conjointement dans l'hybride sous forme d'un réseau de fibres.

2. Hybride métal-matière plastique selon la revendication 1, dans lequel la proportion de l'alliage métallique entrant en fusion dans la zone comprise entre 100°C et 400°C et des fibres de cuivre est ≥ 60 % en poids.

3. Hybride métal-matière plastique selon l'une des revendications précédentes, lequel a une résistance spécifique de passage inférieure à 10⁻² Ωcm et/ou une conductivité thermique supérieure à 5 W/mK.

4. Hybride métal-matière plastique selon la revendication 1, dans lequel la longueur de la fibre est comprise entre 1 et 10 mm, l'épaisseur < 100 µm et/ou la taille des particules < 100 µm.

5. Hybride métal-matière plastique selon l'une des revendications précédentes, dans lequel le composé métallique entrant en fusion dans la zone comprise entre 100°C et 400°C comprend une proportion de bismuth, de zinc et/ou d'étain.

6. Corps moulé obtenu par un processus habituel de mise en forme de matière plastique, et qui est réalisé au moins en partie à partir d'un hybride métal-matière plastique selon l'une des revendications 1 à 6.

7. Utilisation d'un hybride selon l'une des revendications 1 à 6 dans l'électrotechnique, l'électronique, dans des composants électromagnétiques et/ou pour la dissipation de chaleur.
